# EUROPEAN PATENT SPECIFICATION

(11) **EP 0 669 025 B1**
(45) Date of publication and mention of the grant of the patent: **08.03.2000**
(21) Application number: 93923291.4
(22) Date of filing: 07.10.1993
(51) Int. Cl.: G06F 11/10, H04L 1/00

(54) **A DUAL MODE RADIO COMMUNICATION UNIT**
FUNKNACHRICHTENEINHEIT MIT ZWEI BETRIEBSARTEN
UNITE DE COMMUNICATION RADIO A DOUBLE MODE

(30) Priority: 10.11.1992 US 973893
(43) Date of publication of application: 30.08.1995
(73) Proprietor: MOTOROLA, INC., Schaumburg, IL 60196 (US)
(72) Inventor: BORTH, David, E., Palatine, IL 60067 (US); HAUG, John, R., Arlington Heights, IL 60004 (US); RASKY, Phillip, D., Buffalo Grove, IL 60089 (US); CHIASSON, Gregory, M., Barrington, IL 60010 (US)
(74) Representative: Dunlop, Hugh Christopher
(86) International application number: US9309565
(87) International publication number: WO9411819

(56) References cited:
- EP-A- 0 188 271
- EP-A- 0 423 485
- GB-A- 2 253 546
- US-A- 4 802 169
- US-A- 4 979 174
- US-A- 5 097 507

## Description

### Related Inventions

The present invention is related to the following inventions which are assigned to the assignee of the present invention:

Dual Mode Communication Network by Morton Stern et al., corresponding to patent EP-A- 0 621 999.

Method Of Registering/Reassigning A Call In A Dual Mode Communication Network by Borth et al., corresponding to patent US-A- 5 574 973.

A Frequency Hopping Code Division Multiple Access Radio Communication Unit by Chiasson et al., corresponding to patent US-A- 5 546 429.

### Field of the Invention

The present invention relates to radio communication systems and, more particularly, to a dual mode radio communication unit.

### Background of the Invention

Cellular radio communication systems typically include a number of central communication base sites. Each central communication site has a service area coverage for servicing mobile communication units within the service area. The service areas typically are arranged such that adjacent remote base site service coverage areas overlap in a manner that provides a substantially continuous service region. The substantially continuous service region provides uninterrupted service by handing off mobile communication units from one base site serving a service area to an adjacent base site serving another service area.

Pedestrian as well as mobile users will typically access the same cellular radio communication systems. For purposes of this discussion, a pedestrian user is one who roams slowly (10 kph, kilometers per hour, or less) as opposed to a mobile user (up to 100 kph or more) user. However, these cellular communication systems are typically designed to provide adequate performance for the worst case environment (i.e., the mobile user). As such, the cellular radio communication systems typically provide continual overhead measurements used by the system to maintain channel quality or perform hand-off functions. Since these measurements require the same amount of processing whether a user is a mobile user or a pedestrian user, the pedestrian user is charged the same fee for using their cellular phone as the user who is a mobile user.

Therefore, there exists a need in the industry for a personal communication system (PCS) which would provide a low tier system for pedestrian users at a reduced cost. The low tier system would provide access via radio frequency (RF) link to a basic cellular network which may or may not provide hand-off capability between low tier service areas. In addition, a high tier system should be provided for the mobile user. This high tier system would have many of the features found in current cellular systems including hand-off between high tier service areas.

In order to avoid the necessity of having two separate radio communication units to operate in the low and high tier communication system, respectively, it is desirable to provide a dual mode radio communication unit capable of operating in either the low tier or high tier communication unit. In addition, it is desirable to design the dual mode radio communication unit to utilize shared components which may be used in both low and high tier operational modes of the communication unit.

GB-A-2253546 describes a radio communications transceiver having a signal processor for executing one of several voice coding procedures, chosen according to line quality. Each procedure has a different ratio of information code bits and error correction bits. It does not, however, provide a two-tier service, one for a pedestrian user and one for a mobile user.

The present invention consists of radio communication apparatus in accordance with independent claims 1 and 5.

### Brief Description of the Drawings

FIG. 1,2 are diagrams showing a preferred embodiment digital cellular radio communication unit for operation in a first and a second mode, respectively.
FIG. 3, 4 are diagrams showing an alternative preferred embodiment digital cellular radio communication unit for operation in a first and a second mode, respectively.
FIG. 5, 6 are diagrams showing another alternative preferred embodiment digital cellular radio communication unit for operation in a first and a second mode, respectively.

### Detailed Description

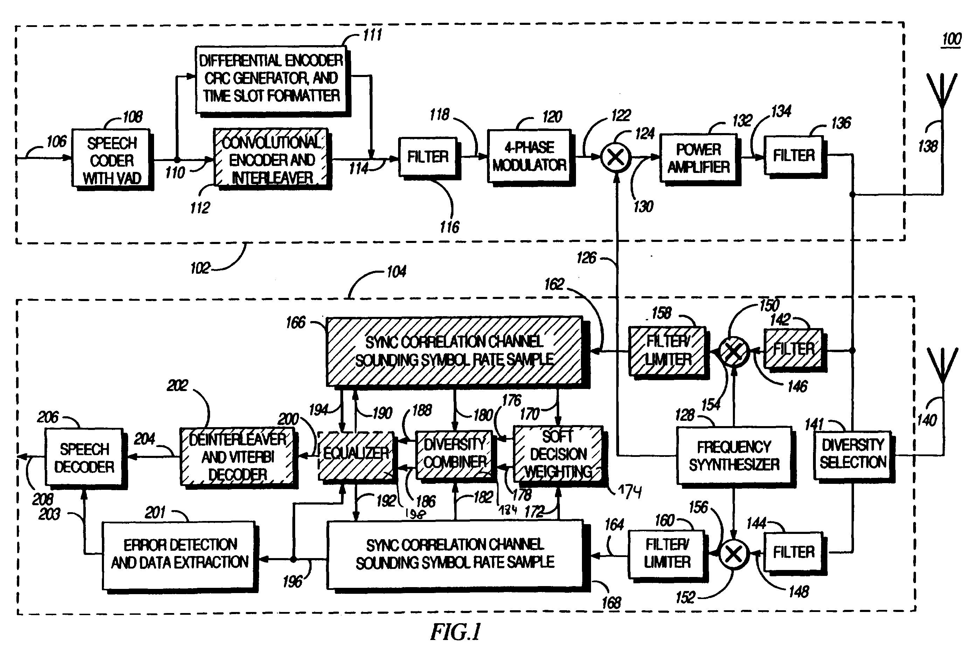

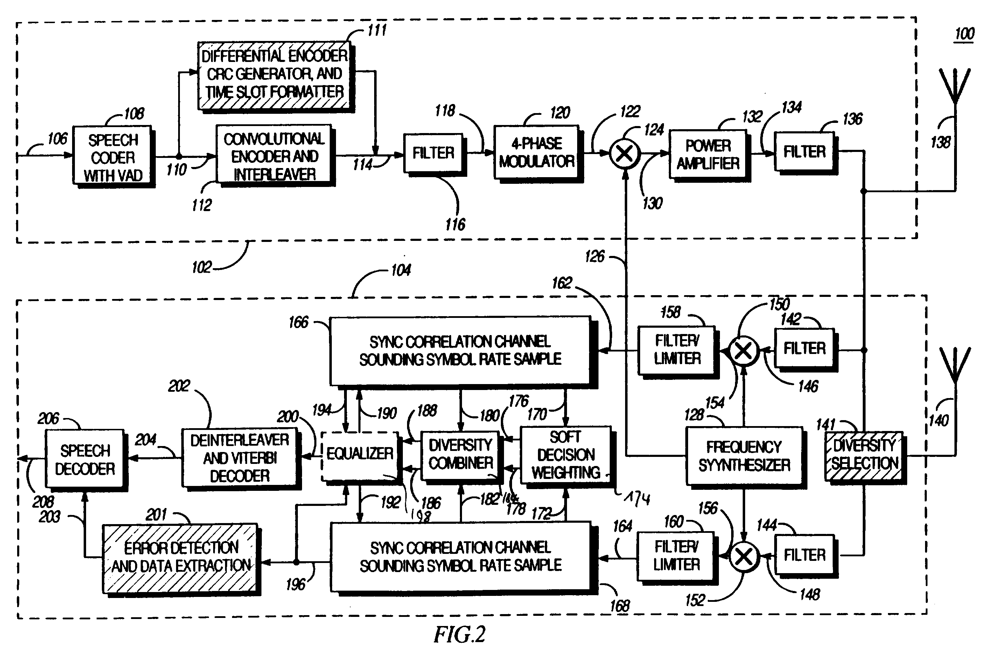

Referring now to FIG. 1 and FIG. 2, a preferred embodiment dual-tier PCS Communication unit 100 is depicted in block diagram form. The dual-tier PCS communication unit 100 preferably is designed to operate as a communication unit in a low-tier (shown in FIG. 1) and a high-tier (shown in Fig. 2) PCS mode of operation. In addition, the dual-tier PCS communication unit **100** preferably is designed to share several logical components between the low-tier and high-tier communication unit so as to reduce complexity and cost of the overall communication unit. Further, dual-tier PCS communication unit **100** preferably includes mode selection circuitry which powers down or disables logical components which are not used for operating in one communication operational mode while the communication unit **100** is performing operations in the other communication operational mode. The disablement (e.g., powering down) unused circuitry causes significantly less current drain of the overall communication unit and as such prolongs the battery life of mobile/portable subscriber units which operate on batteries.

As shown, the communication unit **100** may be logically separated into transmitter **102** and receiver **104** function portions. It will be appreciated by those skilled in the art that although these communication functions have been logically separated, the actual implementation of these functions may be accomplished in a variety of different manners including, but not limited to properly programming a digital signal processor (DSP), coupling discrete components together, and using a combination of one or more application specific integrated chips (ASICs).

Referring now more specifically to FIG. **1**, a preferred embodiment dual-tier communication unit operating as a low-tier communication unit is shown. A operating mode selection device (not shown) has disabled communication unit components **112**, **142**, **150**, **158**, **166**, **174**, **184**, **198**, and **202** which are not used in low-tier communication mode. The operating mode selection device may be implemented as a micro controller which sends enable and disable signals to various communication unit components. Alternatively, a digital signal processor may be controlled by software to perform only certain functions in each operational mode. However, it will be appreciated by those skilled in the art that several other techniques may be utilized to implement a mode selection device without departing from the scope of the present invention.

The transmitter portion **102** receives an information signal **106**. The information signal **106** may contain data or digitized speech. In the case that the information signal **106** contains digitized speech, the information signal **106** is processed by a speech coder **108** to further encode the digitized speech. Preferably this speech coder employs a voice activity detection (VAD) mechanism to minimize the number of encoded data bits **110** which represent the digitized speech. In the alternative, if the information signal **106** contains data, then the data is passed through the speech coder **108** as the encoded data bits **110**.

These encoded data bits **110** are subsequently coded **111** with error detection codes. In the preferred transmitter portion **102** design, the data bits **110** are differentially encoded and encoded with a cyclic redundancy code (CRC). The length of the CRC is chosen such that it will reliably detect errors while not becoming computationally burdensome. The complexity of the code may be tailored to the particular hardware implementation. In addition, the dual-tier PCS transceiver **100** may optionally utilize selective application of CRC in error detection coding. After coding, a known synchronization preamble is added **112** to the data bit stream, and the data bit stream is formatted for time division multiple access (TDMA) transmission. Subsequently, the data bit stream **114** is filtered by a full raised cosine filter **116** with a rolloff factor of 0.5 to meet bandwidth and intersymbol interference requirements.

This filtered data bit stream **118** preferably is subsequently four-phase modulated **120** (i.e., quadrature phase shift keying (QPSK) modulated). The four-phase modulated data bit stream **122** preferably is provided to one input of mixer **124** and a TDMA carrier signal **126** is provided to the other input of mixer **124**. The TDMA carrier signal **126** preferably is generated by a frequency synthesizer **128** which generates a carrier signal within a predetermined RF band and time slot. The mixed TDMA signal **130** is subsequently amplified by power amplifier **132**, supplied **134** to a final stage filter **136** and radiated by antenna **138** over a communication channel.

The receiver portion **104** is designed to efficiently detect and decode the transmitted signal. In view of the fading and multipath channels which are prevalent in mobile communications, a diversity selection receiver is employed to improve performance. At the receiver **104**, a diversity selection device **141** receives signals from a first **138** and second **140** antenna and outputs one of the two signals to filter **144**. The selection device preferably will determine which of the two signals to output by measuring the channel quality in previously received signal time slots (e.g., two time slots) on each antenna **138**, **140** and selected the better signal. It will be appreciated by those skilled in the art that the channel quality can be measured with several parameters including bit error rates, interference in the signal, signal power, and etc.

Filters **144** and down converts **152** the received signal to a low IF frequency of approximately four megahertz. The frequency synthesizer **128** is used within the down conversion process **152** to follow the TDMA signal. At this point the signal **156** is hard limited **160**. This feature eliminates the need for any form of automatic gain control (AGC) and greatly reduces the required resolution of the analog to digital (A/D) converter and the size of the data paths required in the digital portion of the receiver **104**. Following the RF and IF processing, the low IF signal is bandpass sampled and converted to the digital domain **160**. A relatively low cost A/D converter preferably samples at sixteen times the symbol rate and has only four bits of resolution. Four bit quantization can be used, because the earlier hard limiting **160** has removed the magnitude of the four-phase waveform. At this point, additional filtering is performed by low complexity (e.g., three to five taps) digital bandpass filters to eliminate direct current (DC) power offsets, reduce sampling noise, and separate the inphase and quadrature branches. The processed signal may then be decimated **160** by a factor of four effecting a translation to baseband of the hard-limited data samples. The translation to baseband can be readily performed, because the careful selection of a low IF frequency allows the communication unit **100** to utilize the image frequencies.

Now the processed signal is correlated **168** with the known predetermined synchronization word to determine the optimum sampling point and to perform carrier recovery. Preferably the transmitted signal structure has the synchronization word inserted before the data such that the correlation **168** can be performed with only minimal buffering of the received signal **164**. The largest correlation magnitude can serve as an estimate of the channel gain, and the phase of this correlation reflects the conjugate of the phase correction required by the signal **164**. Once the largest correlation has been determined, the data samples are further decimated to single sample per symbol. Preferably, the dual-tier communication unit **100** actually performs very little processing with oversampled digital data. This allows the receiver portion **104** to minimize power consumption, memory storage and cost.

Following the correlation process **168**, the data sample stream **196** is has the data samples extracted and decoded **201**. At this point, the error detection code (e.g., cyclic redundancy check (CRC) code) may optionally be used **201** to check for errors over the span of the code's input. The decoded bits **203**, along with the CRC-derived erasure information, preferably is then output as data **208** or input to the speech decoder **206** and then output as voice **208**.

Referring now more specifically to FIG. **2**, a preferred embodiment dual-tier communication unit operating as a high-tier communication unit is shown. A operating mode selection device (not shown) has disabled communication unit components **111**, **141**, and **201** which are not used in high-tier communication mode.

The transmitter portion **102** receives an information signal **106**. The information signal **106** may contain data or digitized speech. In the case that the information signal **106** contains digitized speech, the information signal **106** is processed by a speech coder **108** to further encode the digitized speech. Preferably this speech coder employs a voice activity detection (VAD) mechanism to minimize the number of encoded data bits **110** which represent the digitized speech. In the alternative, if the information signal **106** contains data, then the data is passed through the speech coder **108** as the encoded data bits **110**.

These encoded data bits are subsequently coded **112** with error detection and error correction codes. In the preferred transmitter portion **102** design, a cyclic redundancy code (CRC) is used for error detection, and a convolutional code is used for forward error correction. The length of the CRC is chosen such that it will reliably detect errors while not becoming computationally burdensome. A similar strategy is followed in choosing the constraint length of the convolutional codes. The complexity of the code may be tailored to the particular hardware implementation. In addition, the dual-tier PCS transceiver **100** may optionally utilize non uniform coding rates and selective application of CRC in error detection coding.

After coding, the data bit stream is interleaved **112** to disperse transmission errors of a single frequency hop over a larger period. The dual-tier communication unit **100** preferably implements a convolutional interleaver, because this structure results in a dispersion of channel errors which is superior to a block interleaver having twice the amount of interleaving delay. By choosing the vertical dimension of the interleaver to be evenly divisible into the number of interleaved symbols transmitted within a frequency hopping slot, the interleaver has been structured in a manner which will allow synchronization even if a slot is dropped. A known synchronization preamble is added **112** to the interleaver output, and the data bit stream **114** is formatted for time division multiple access (TDMA) transmission. The data bit stream **114** is filtered by a full raised cosine filter **116** with a rolloff factor of 0.5 to meet bandwidth and intersymbol interference requirements.

This filtered data bit stream **118** preferably is subsequently four-phase modulated **120** (i.e., quadrature phase shift keying (QPSK) modulated). The four-phase modulated data bit stream **122** preferably is provided to one input of mixer **124** and a frequency hopping carrier signal **126** is provided to the other input of mixer **124**. The frequency hopping carrier signal **126** preferably is generated by a frequency synthesizer **128** which generates a carrier signal within a predetermined RF band that hops according to a predetermined pattern (i.e., the frequency hop synthesizer **128** steps through the frequency hopping code). The mixed frequency hopping signal **130** is subsequently amplified by power amplifier **132**, supplied **134** to a final stage filter **136** and radiated by antenna **138** over a communication channel.

It will be appreciated by those skilled in the art that the predetermined RF band does not have to be a contiguous frequency band, but rather only need be within a specific range of frequencies to which the chosen frequency synthesizer is capable of operating. In addition, the predetermined pattern (i.e., hopping code) is used to determine the sequence in which a particular communication unit is to hop over the RF band such that the communication unit causes minimal interference to other communication units operating in the same multiple access communication system. Further, it will be appreciated that frequency hop transmission is employed to help mitigate channel impediments such as slow fading. Furthermore, the use of frequency hopping provides another form of diversity to the high-tier communication system and results in the system performance being independent of a user's speed (e.g., if a user is traveling in a vehicle).

The receiver portion **104** is designed to efficiently detect and decode the transmitted signal. In view of the fading and multipath channels which are prevalent in mobile communications, a diversity combining receiver is employed to improve performance. At the receiver **104**, a diversity selection device **141** receives signals from a first **138** and second **140** antenna. However, since it is not used in the high-tier operational mode, only the signal received by antenna **140** is output to filter **144**.

Each diversity branch (i.e. first branch **138**, **142**, **146**, **150**, **154**, **158**, **162**, and **166** as well as second branch **140**, **144**, **148**, **152**, **156**, **160**, **164**, and **168**) first filters **142**, **144** and down converts **150**, **152** its respective received signal to a low IF frequency of approximately four megahertz. The frequency synthesizer **128** is used within the down conversion process **150**, **152** to follow the hopping signal. At this paint the signal **154**, **156** is hard limited **158**, **160**. This feature eliminates the need for any form of automatic gain control (AGC) and greatly reduces the required resolution of the analog to digital (A/D) converter and the size of the data paths required in the digital portion of the receiver **104**.

Following the RF and IF processing, the low IF signal is bandpass sampled and converted to the digital domain **158**, **160**. A relatively low cost A/D converter preferably samples at sixteen times the symbol rate and has only four bits of resolution. Four bit quantization can be used, because the earlier hard limiting **158**, **160** has removed the magnitude of the four-phase waveform. At this point, additional filtering is performed by low complexity (e.g., three to five taps) digital bandpass filters to eliminate DC offsets, reduce sampling noise, and separate the inphase and quadrature branches. Each branch may then be decimated **158**, **160** by a factor of four effecting a translation to baseband of the hard-limited data samples. The translation to baseband can be readily performed, because the careful selection of a low IF frequency allows the communication unit **100** to utilize the image frequencies.

Now each branch is correlated **166**, **168** with the known predetermined synchronization word to determine the optimum sampling point and to perform carrier recovery. Preferably the transmitted signal structure has the synchronization word inserted before the data such that the correlation **166**, **168** can be performed with only minimal buffering of the received signal **162**, **164**. The largest correlation magnitude can serve as an estimate of the channel gain, and the phase of this correlation reflects the conjugate of the phase correction required by the signal **162**, **164**. Once the largest correlation has been determined, the data samples are further decimated to single sample per symbol. Preferably, the high-tier communication unit **100** actually performs very little processing with oversampled digital data. This allows the receiver portion **104** to minimize power consumption, memory storage and cost.

Next, a signal quality estimate, or weighting parameter **176**, **178**, is calculated **174** for each branch **170**, **172**, and the branches **180**, **182** are diversity combined **184**. Within this process, the scaling **176**, **178** required for soft decision decoding **202** is also applied **184** to the signal **180**, **182**. While it is possible to use a variety of weighting parameters, the best performance will be obtained from a ratio-based statistic. The ability of the high-tier communication unit **100** to compute a ratio-based statistic allows the successful calculation of soft information despite the presence of the hard limiter **158**, **160**.

As FIG. **1** indicates, an equalizer **198** is a possible receiver portion **104** option. Such an equalizer **198** would require input **194**, **196** from each branch as well as the output **186** of diversity combiner **184**. In addition, in order for the equalizer **198** to perform optimally, the equalizer **198** would need to output fine tuning adjustment information to each branch **190**, **192** as well as the diversity combiner **188**. Subsequently, the equalized combined data sample stream would be output **200** to the deinterleaver **202**. While the high-tier PCS operational mode does not exclude the use of an equalizer **198**, preliminary results indicate that its use results in only a small performance improvement relative to a system employing only frequency-hopping and diversity.

Following the weighting and combining process **184**, the data sample stream **186**, **200** is convolutionally deinterleaved **202**. The deinterleaver output is Viterbi decoded **202** in an attempt to correct the errors introduced by the communication channel. At this point, the error detection code (e.g., cyclic redundancy check (CRC) code) may optionally be used **202** to check for errors over the span of the code's input. The decoded bits **204**, along with the CRC-derived erasure information, preferably is then output as data **208** or input to the speech decoder **206** and then output as voice **208**.

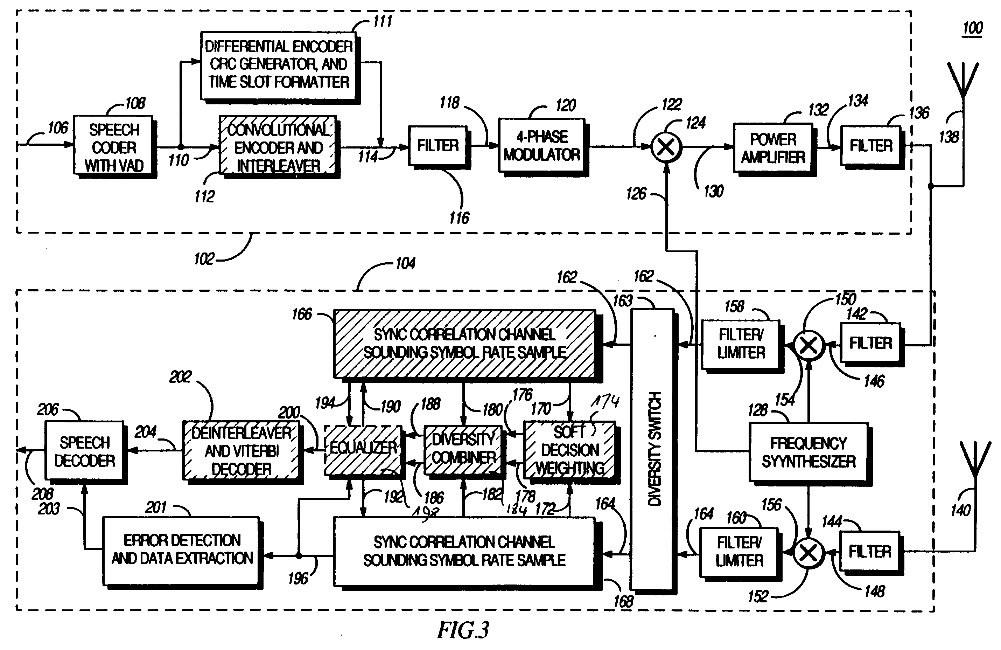

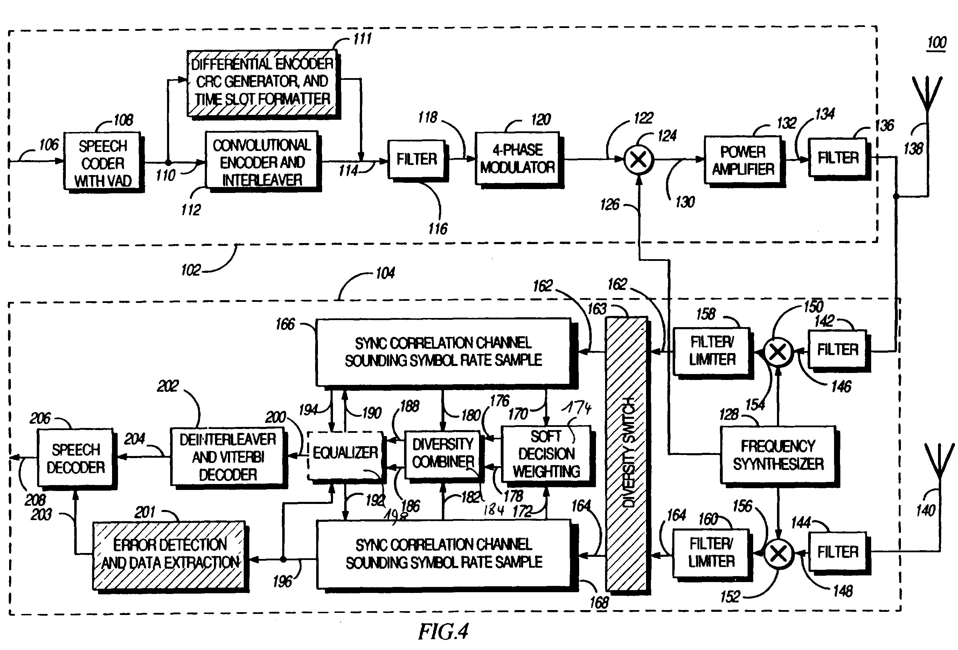

An alternative preferred embodiment dual-tier communication unit **100** to the one depicted in FIG. **1** and FIG. **2** is shown in FIG. **3** and FIG. **4**. This alternative preferred embodiment dual-tier communication unit operates substantially as was described in reference to FIG. **1** and FIG. **2**. However, the position of the diversity selection device **163** relative to the other receiver portion **104** components has been changed. In this position, the diversity selection device **163** may potentially have better channel quality information to use in the determining process, than the diversity selection device **143** (shown in FIG. **1**) may have due to it's relative position in the receiver portion **104**.

Referring now more specifically to FIG. **3**, a dual-tier communication unit operating as a low-tier communication unit is shown. The dual-tier communication unit operates substantially as described with reference to FIG. **1** except for the following. The operating mode selection device (not shown) has disabled communication unit components **112**, **166, 174**, **184**, **198**, and **202** which are not used in low-tier communication mode. Each diversity branch (i.e. first branch **138**, **142**, **146**, **150**, **154**, and **158** as well as second branch **140**, **144**, **148**, **152**, **156**, and **160**) first fibers **142**, **144** and down converts **150**, **152** its respective received signal to a low IF frequency of approximately four megahertz. The frequency synthesizer **128** is used within the down conversion process **150**, **152** to follow the TDMA signal. At this point the signal **154**, **156** is hard limited **158**, **160**. Following the RF and IF processing, the low IF signal is bandpass sampled and convened to the digital domain **158**, **160**. Further, additional filtering is performed to eliminate DC offsets, reduce sampling noise, and separate the inphase and quadrature branches. Each branch may then be decimated **158**, **160** by a factor of four effecting a translation to baseband of the hard-limited data samples. Now the diversity selection device **163** receives the hard-limited data samples **162**, **164** and outputs **164'** one of the two signals to be correlated **168** which corresponds to the channel branch having the better channel quality.

Referring now more specifically to FIG. **4**, a dual-tier communication unit operating as a high-tier communication unit is shown. The dual-tier communication unit operates substantially as described with reference to FIG. **2** except for the following. The operating mode selection device (not shown) has disabled communication unit components **111**, **163** and **201** which are not used in high-tier communication mode. In addition, the diversity selection device **163** receives signals **162** and **164**. However, since the diversity selection device **163** is not used in the high-tier operational mode, the signals **162**, **164** are passed through and output **162'**, **164'**, respectively, to their respective correlation circuitry.

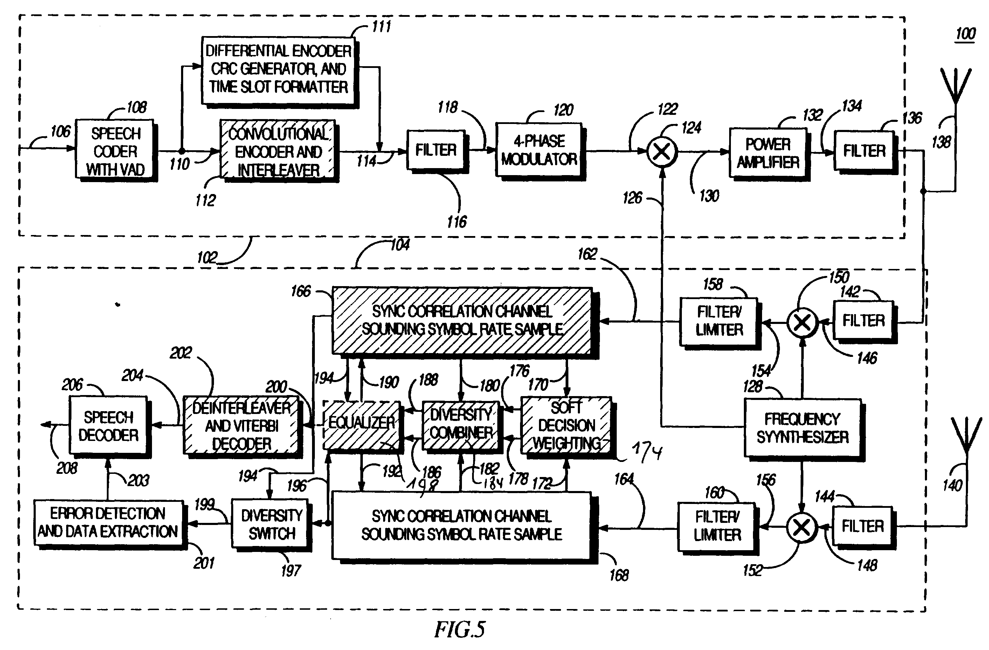

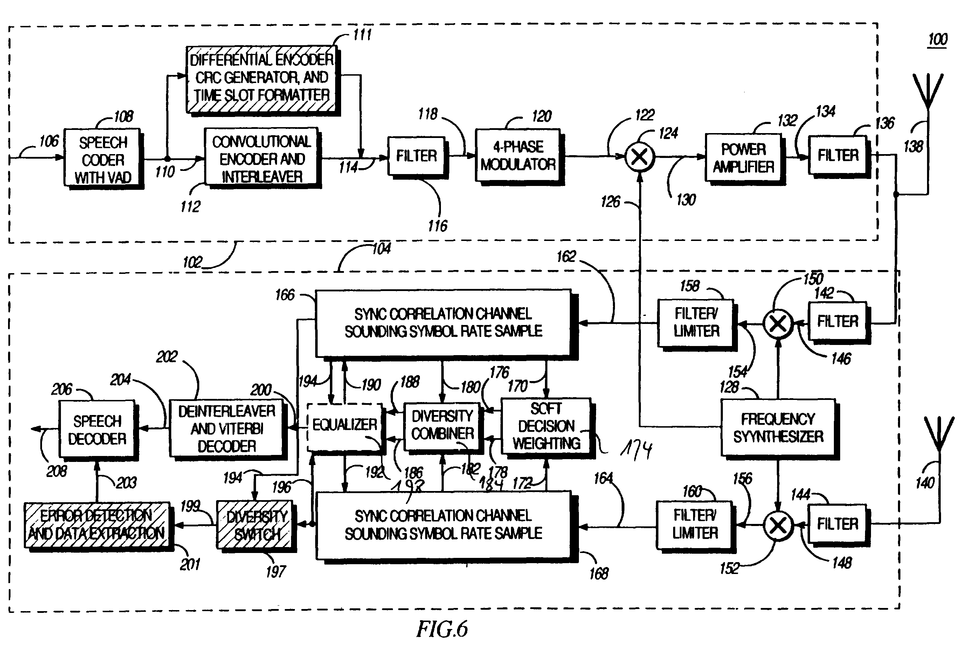

Another alternative preferred embodiment dual-tier communication unit **100** to the one depicted in FIG. **1** and FIG. **2** is shown in FIG. **5** and FIG. **6**. This alternative preferred embodiment dual-tier communication unit operates substantially as was described in reference to FIG. **1** and FIG. **2**. However, the position of the diversity selection device **197** relative to the other receiver portion **104** components has been changed. In this position, the diversity selection device **197** may potentially have better channel quality information to use in the determining process, than the diversity selection device **143** (shown in FIG. **1**) and the diversity selection device **163** (shown in FIG. **3**) may have due to it's relative position in the receiver portion **104**. As a design tradeoff, however, this alternative dual-mode communication unit **100** requires more receiving components to be enabled during low-tier operation than the communication unit **100** shown in FIG. **1**.

Referring now more specifically to FIG. **5**, a dual-tier communication unit operating as a low-tier communication unit is shown. The dual-tier communication unit operates substantially as described with reference to FIG. **1** except for the following. The operating mode selection device (not shown) has disabled communication unit components **112**, **166**, **174**, **184**, **198**, and **202** which are not used in low-tier communication mode. Each diversity branch (i.e. first branch **138**, **142**, **146**, **150**, **154**, and **158** as well as second branch **140**, **144**, **148**, **152**, **156**, and **160**) first filters **142**, **144** and dawn converts **150**, **152** its respective received signal to a low IF frequency of approximately four megahertz. The frequency synthesizer **128** is used within the down conversion process **150**, **152** to follow the TDMA signal. At this point the signal **154**, **156** is hard limited **158**, **160**. Following the RF and IF processing, the low IF signal is bandpass sampled and converted to the digital domain **158**, **160**. Further, additional filtering is performed to eliminate DC offsets, reduce sampling noise, and separate the inphase and quadrature branches. Each branch may then be decimated **158**, **160** by a factor of four effecting a translation to baseband of the hard-limited data samples. Now each branch is correlated **166**, **168** with the known predetermined synchronization word to determine the optimum sampling point and to perform carrier recovery. Once the correlation has been determined, the data samples are further decimated to single sample per symbol. Following the correlation process **166**, **168**, the diversity selection device **197** receives the symbol rate data samples **194**, **196** and outputs **199** one of the two signals (i.e., the signal which corresponds to the channel branch having the better channel quality) to have data samples extracted and decoded **201**.

Referring now more specifically to FIG. **6**, a dual-tier communication unit operating as a high-tier communication unit is shown. The dual-tier communication unit operates substantially as described with reference to FIG. **2** except for the following. The operating mode selection device (not shown) has disabled communication unit components **111**, **197** and **201** which are not used in high-tier communication mode.

Alternatively, the preferred embodiment dual mode digital radio communication unit **100** shown in FIG. **1** through FIG. **6** can be described as follows. A dual mode digital radio communication unit **100** for a digital communication system is provided. The communication unit **100** includes a transmitter portion **102** for transmitting an encoded input information signal **106** over a radio communication channel. The transmitter portion **102** includes a data bit coder **108** for encoding an input information signal **106** into a data bit stream **110**. An error controller **111**, **112** is operatively coupled to the data bit coder **108** for generating a transmission error protected data bit stream **114**. The error controller includes the following two transmission protection apparatus: (1) a cyclic redundancy check generator **111** for encoding the data bit stream **110** and (2) a forward error correction device **112** for convolutionally encoding and interleaving the data bit stream **110**. A synchronizer is operatively coupled to the error controller for inserting a predetermined synchronization sequence into the error protected data bit stream **114**.

A multi-phase modulator **120** is operatively coupled to the synchronizer for generating a multi-phase intermediate signal **122** through the use of the synchronization sequence inserted and error protected data bit stream **114**. A frequency translator **124** is operatively coupled to the multi-phase modulator **120** for generating a radio frequency encoded input information signal **130** by combining the intermediate signal **122** with a radio communication channel selecting signal **126** generated by a frequency synthesizer **128**. The frequency synthesizer **128** operates in one of two particular modes of operation including: (1) a non-frequency hopping time division multiple access mode and (2) a frequency hopping code division multiple access mode. A mode selector (not shown) is operatively coupled to the error controller **111**, **112** for enabling one of (1) the transmission protection apparatus cyclic redundancy check generator **111** and (2) the transmission protection apparatus forward error correction device **112** for use with a particular mode of operation such that the transmission protection apparatus which are not used in the selected particular mode of operation are disabled.

The communication unit **100** also includes a receiver portion **104** for receiving the encoded input information signal from over the radio communication channel. The receiver portion **104** includes a demodulator **150**, **152** for generating a first **154** and a second **156** group of data samples of the received signal corresponding to a signal received at a first **138** and a second **140** antenna, respectively, through the use of a radio communication channel selecting signal generated by a frequency synthesizer **128**. The frequency synthesizer **128** operates in one of two particular modes of operation including: (1) a non-frequency hopping time division multiple access mode and (2) a frequency hopping code division multiple access mode.

A hard limiter **158**, **160** is operatively coupled to the demodulator **150**, **152** for hard limiting the first **154** and second **156** group of data samples by removing the magnitude of each sample in the first **154** and the second **156** group of data samples. A frequency translator **158**, **160** is operatively coupled to the hard limiter **158**, **160** for translating a subset of the hard-limited data samples of the first **154** and the second **156** group to baseband frequencies by decimating each group of data samples in a time domain.

A correlator **166**, **168** is operatively coupled to the frequency translator **158**, **160** for correlating the subset of the hard-limited data samples of the first **162** and the second **164** group of data samples to a known predetermined synchronization sequence so as to independently determine an optimal sampling point for each group of data samples and to generate symbol rate data samples of each group.

An error controller **174**,**184**,**201**,**202** is operatively coupled to the correlator **166**,**168** for generating estimated information signal samples **208** from the symbol rate data samples **180**,**182** of each group according to an algorithm either (1) an error detection algorithm or (2) an error correction algorithm. The error detection algorithm includes: selecting one **196** of the first and the second groups of data samples corresponding to the antenna **138**,**140** having a better estimated signal quality, performing **201** a cyclic redundancy check on the selected group of symbol rate data samples **196** and extracting **201** data bits from the selected group of symbol rate data samples **196**. The error correction algorithm includes: generating **174** weighting coefficients **176**, **178** for the data samples of the first **180** and the second **182** group, scaling **184** the first **180** and the second **182** group of symbol rate data samples, maximum ratio combining **184** the first **180** and the second **182** scaled symbol rate data samples into a stream of combined data samples **186**, and deinterleaving **202** and maximum-likelihood decoding **202** the stream of combined data samples **186**,**200** into estimated information samples **208**.

Finally, mode selector (not shown) is operatively coupled to the demodulator **150**,**152** , hard limiter **158**,**160** , frequency translator **158**,**160** , correlator **166**,**168** , and error controller **174**,**184**,**201**,**202**, for receiving the received signal according to one of the error control algorithms associated with a particular mode of operation of the dual mode radio communication unit **100** such that the demodulator **150**,**152** , hard limiter **158**,**160** , frequency translator **158**,**160** , correlator **166**,**168** , and error controller **174**,**184**,**201**,**202** associated with generating estimated information signal samples **208** according to the algorithm which is not used in the selected particular mode of operation are disabled.

In summary, the dual mode radio communication unit **100** offers several improvements over known technology. The techniques in communication system design which allow the shared use of several transmitter and receiver components offer large cost savings while minimizing complexity of communication circuitry and reduced power requirements over other dual mode communication unit designs.

Although the invention has been described and illustrated with a certain degree of particularity, it is understood that the present disclosure of embodiments has been made by way of example only and that numerous changes in the arrangement and combination of parts as well as steps may be resorted to by those skilled in the art without departing from the scope of the invention as claimed.

## Claims

1. A dual mode radio communication unit (100) for a digital communication system, said unit (100) including error control means for protecting an input information signal from transmission errors, the error control means comprising first (111) and second (112) transmission protection apparatus, and mode selection means, coupled to the error control means, for enabling only one of the transmission protection apparatuses for use with a particular mode of operation of the unit (100) and characterised in that; the first transmission protection apparatus includes error detection means (111) for encoding the input information signal (106) into an error protected data bit stream (114) the second transmission protection apparatus includes forward error correction means (112) for encoding the input information signal (106) into an error protected data bit stream (114), and the mode selection means comprises means for disabling the transmission protection apparatus (111, 112) not used in the selected particular mode of operation.

2. The dual mode radio communication unit of claim 1 wherein:
(a) the error detection means (111) comprises a cyclic redundancy check generating means for encoding the input information signal; and
(b) the forward error correction (112) means comprises means for convolutionally encoding and interleaving the input information signal.

3. The dual mode radio communication unit of either claim 1 or claim 2 further comprising:
(a) data bit coding means (108), coupled to the error control means, for encoding a input information signal into a data bit stream (110), the data bit stream being provided to the error control means for subsequent transmission protection encoding; and
(b) synchronization means, coupled to the error control means, for inserting a predetermined synchronization sequence into the error protected data bit stream.

4. The dual mode radio communication unit of any preceding claim further comprising:
(a) multi-phase modulating means (120), coupled to the error control means, for generating a multi-phase intermediate signal through the use of the error protected information signal; and
(b) frequency translation means (124), coupled to the multi-phase modulating means (120), for generating a radio frequency transmission signal by combining the intermediate signal with a radio communication channel selecting signal generated by a frequency synthesizer (128), the frequency synthesizer operating in one of two particular modes of operation including: (i) non-frequency hopping time division multiple access mode and (ii) frequency hopping code division multiple access mode.

5. A dual mode radio communication unit (100) for a digital communication system, comprising:
error control means for generating estimated information signal samples (208) from a signal (164) received over a radio communication channel according to an algorithm selected from a group of algorithms; and
mode selection means, coupled to the error control means, for receiving the received signal (164) according to one of the group of algorithms associated with a particular mode of operation of the dual mode radio communication unit,
and characterised in that the group of algorithms consists of an error detection algorithm (201) and an error correction algorithm (202) and in that the mode selection means comprises means for disabling the error control means for generating estimated information signal samples (208) according to the algorithm (201, 202) not used in the selected particular mode of operation.

6. The dual mode radio communication unit of claim 5 wherein:
the error control means for generating estimated information signal samples (208) according to the error detection algorithm (201) further comprises means (141) for generating a first and a second group of data samples of the received signal corresponding to the signal received at a first (138) and a second (140) antenna and selecting one of the first and the second groups of data samples corresponding to the antenna having a better estimated signal quality, means (201) for performing a cyclic redundancy check on the selected group of data samples and extracting data bits (203) from the selected group of data samples, means (158, 160) for generating a first (162) and a second (164) group of data samples of the received signal corresponding to the signal received at the first and the second antenna, means (174) for generating weighting coefficients for the data samples of the first (162) and the second (164) group, scaling (184) and maximum ratio combining the first and the second group into a stream of combined data samples (200), and means (202) for deinterleaving and maximum-likelihood decoding the stream of combined data samples (200) into estimated information samples (204).

7. The dual mode radio communication unit of claim 5 further comprising:
(a) demodulating means (150, 152) for generating a first (162) and a second (164) group of data samples of the received signal corresponding to a signal received at a first (138) and a second (140) antenna, respectively, through the use of a radio communication channel selecting signal generated by a frequency synthesizer (128), the frequency synthesizer operating in one of two particular modes of operation including: (i) non-frequency hopping time division multiple access mode and (ii) frequency hopping code division multiple access mode; Limiting and translation means (158, 160) comprising:
(b) hard-limiting means, coupled to the demodulating means (150, 152), for removing the magnitude of each sample in the first and the second group of data samples; and
(c) frequency translation means, coupled to the hard-limiting means, for translating a subset of hard-limited data samples of the first and the second group to baseband frequencies by decimating the group of samples in the time domain; and
(d) correlation means (166 168), operatively coupled to the limiting and translation means (158, 160), for correlating the subset of hard-limited data samples of the group of data samples (162, 164) to a known predetermined synchronization sequence to independently determine an optimal sampling point for the group of data samples to generate symbol rate data samples of the group, the correlation means (166, 168) providing the symbol rate data samples to the error control means when the error control means generates estimated information signal samples (208) according to the error detection algorithm (201) and the correlation means determines channel sounding information, means (174) for generating weighting coefficients of the hard-limited symbol rate data samples of the first and the second group for diversity combining and maximum likelihood decoding, means (184) for scaling the first and the second group of symbol rate data samples and maximum ratio combining the first and the second scaled symbol rate data samples into a stream of combined data samples, and providing the stream of combined symbol rate data samples to the error control means (202) whereby the error control means generates estimated information signal samples (208) according to the error correction algorithm (202).

8. A dual mode digital radio communication system comprising a transmitter (102) comprising the radio communication unit of claim 1 and a receiver (104) comprising the dual mode radio communication unit of claim 5.

## Patentansprüche

1. Funkkommunikationseinheit (100) mit zwei Betriebsarten für ein digitales Kommunikationssystem, wobei die Einheit (100) umfaßt: Fehlersteuerungsmittel zum Schützen eines Eingabeinformationssignals vor Übertragungsfehlern, wobei die Fehlersteuerungsmittel erste (111) und zweite (112) Übertragungsschutzapparate umfassen, und Betriebsart-Auswahlmittel, welche mit den Fehlersteuerungsmitteln gekoppelt sind, um nur einen der Übertragungsschutzapparate zur Verwendung bei einer speziellen Betriebsart der Einheit (100) freizugeben,
dadurch **gekennzeichnet**,
- daß der erste Übertragungsschutzapparat Fehlerdetektionsmittel (111) zum Codieren des Eingabeinformationssignals (106) in einen fehlergeschützten Datenbitstrom (114) aufweist,
- daß der zweite Übertragungsschutzapparat Vorwärtsfehler-Korrekturmittel (112) zum Codieren des Eingabeinformationssignals (106) in einen fehlergeschützten Datenbitstrom aufweist und
- daß die Betriebsart-Auswahlmittel Mittel zum Sperren des Übertragungsschutzapparates (111, 112) aufweisen, welcher bei der ausgewählten speziellen Betriebsart nicht verwendet wird.

2. Funkkommunikationseinheit mit zwei Betriebsarten nach Anspruch 1, bei der:
(a) die Fehlerdetektionsmittel (111) Mittel zum Erzeugen einer zyklischen Redundanzüberprüfung zum Codieren des Eingabeinformationssignals aufweisen; und
(b) die Vorwärtsfehler-Korrekturmittel (112) Mittel für die Convolutionscodierung und Verschachtelung des Eingabeinformationssignals aufweisen.

3. Funkkommunikationseinheit mit zwei Betriebsarten nach Anspruch 1 oder 2, welche weiterhin aufweist:
(a) Datenbit-Codiermittel (108), welche mit den Fehlersteuerungsmitteln gekoppelt sind, zum Codieren eines Eingabeinformationssignals in einen Datenbitstrom (110), wobei der Datenbitstrom den Fehlersteuerungsmitteln zur nachfolgenden Übertragungsschutzcodierung zugeführt wird; und
(b) Synchronisierungsmittel, welche mit den Fehlersteuerungsmitteln gekoppelt sind, um eine vorbestimmte Synchronisierungssequenz in den fehlergeschützten Datenbitstrom einzufügen.

4. Funkkommunikationseinheit mit zwei Betriebsarten nach einem der vorangehenden Ansprüche, welche weiterhin aufweist:
(a) mehrphasige Modulationsmittel (120), welche mit den Fehlersteuerungsmitteln gekoppelt sind, um ein mehrphasiges Zwischensignal durch die Verwendung des fehlergeschützten Informationssignals zu erzeugen; und
(b) Frequenzübersetzungsmittel (124), welche mit den mehrphasigen Modulationsmitteln (120) gekoppelt sind, um ein Funkfrequenzübertragungssignal durch die Kombination des Zwischensignals mit einen Funkkcommunikationskanal-Auswahlsignal zu kombinieren, welches von einem Frequenzsynthesizer (128) erzeugt wurde, wobei der Frequenzsynthesizer in einer der beiden folgenden speziellen Betriebsarten arbeitet: (i) einer Betriebsart mit Mehrfachzugriff in Zeitmultiplex ohne Frequenzsprung und (ii) einer Betriebsart mit Mehrfachzugriff und Codeteilung mit Frequenzsprung.

5. Funkkommunikationseinheit (100) mit zwei Betriebsarten für ein digitales Kommunikationssystem, mit:
- Fehlersteuerungsmitteln zum Erzeugen geschätzter Informationssignal-Abtastwerte (208) aus einen über einen Funkkommunikationskanal empfangenen Signal (164), entsprechend einem Algorithmus, welcher aus einer Gruppe von Algorithmen ausgewählt wurde; und
- Betriebsartauswahlmitteln, welche mit den Fehlersteuerungsmitteln gekoppelt sind, um das empfangene Signal (164) entsprechend einem Algorithmus aus der Gruppe von Algorithmen zu empfangen, welcher mit einer speziellen Betriebsart der Funkkommunikationseinheit mit zwei Betriebsarten assoziiert ist,
dadurch **gekennzeichnet**,
- daß die Gruppe von Algorithmen einen Fehlerdetektionsalgorithmus (201) und einen Fehlerkorrekturalgorithmus (202) aufweist und
- daß die Betriebsartauswahlmittel Mittel zum Sperren der Fehlersteuerungsmittel aufweisen, um geschätzte Informationssignal-Äbtastwerte (208) entsprechend dem Algorithmus (201, 202) zu erzeugen, welcher bei dem ausgewählten speziellen Betriebsmodus nicht verwendet wird.

6. Funkkommunikationseinheit mit zwei Betriebsarten nach Anspruch 5, bei der:
die Fehlersteuerungsmittel zum Erzeugen geschätzter Informationssignal-Abtastwerte (208) entsprechend den Fehlerdetektionsalgorithmus (201) weiterhin Mittel (141) umfassen, um eine erste und eine zweite Gruppe von Datenabtastwerten von empfangenen Signalen zu erzeugen, entsprechend dem von einer ersten (138) und einer zweiten (140) Antenne empfangenen Signal, und zum Auswählen einer der ersten und der zweiten Gruppe von Datenabtastwerten, entsprechend der Antenne mit einer besseren geschätzten Signalqualität, Mittel (201) zum Ausführen einer zyklischen Redundanzüberprüfung bei der ausgewählten Gruppe von Datenabtastwerten und zum Extrahieren von Datenbits aus der ausgewählten Gruppe von Datenabtastwerten, Mittel (158, 160) zum Erzeugen einer ersten (162) und einer zweiten (164) Gruppe von Datenabtastwerten von den empfangenen Signal, entsprechend dem Signal, welches mit der ersten und der zweiten Antenne empfangen wurde, Mittel (174) zum Erzeugen von Gewichtungskoeffizienten für die Datenabtastwerte der ersten (162) und der zweiten (164) Gruppe, zum Skalieren (184) und zum Kombinieren des maximalen Verhältnisses der ersten und der zweiten Gruppe in einem Strom kombinierter Datenabtastwerte (200) und Mittel (202) zum Entschachteln und Decodieren auf der Grundlage maximaler Wahrscheinlichkeit des Stroms kombinierter Datenabtastwerte (200) in geschätzte Informationsabtastwerte (204).

7. Funkkommunikationseinheit mit zwei Betriebsarten nach Anspruch 5, welche weiterhin aufweist:
(a) Demodulationsmittel (150, 152) zum Erzeugen einer ersten (162) und einer zweiten (164) Gruppe von Datenabtastwerten aus dem empfangenen Signal, entsprechend einem Signal, welches mit einer ersten (138) bzw. einer zweiten (140) Antenne empfangen wurde, durch die Verwendung eines Funkkommunikationskanal-Auswahlsignals, welches von einem Frequenzsynthesizer (128) erzeugt wurde, wobei der Frequenzsynthesizer in einem von zwei speziellen Betriebsarten arbeitet, umfassend; (i) eine Betriebsart mit Mehrfachzugriff im Zeitmultiplex ohne Frequenzsprung und (ii) einer Betriebsart mit Mehrfachzugriff und Codeteilung mit Frequenzsprung; begrenzende Mittel und Übersetzungsmittel (158, 160) mit:
(b) hart begrenzenden Mitteln, welche mit den Demodulationsmitteln (150, 152) gekoppelt sind, um die Größe von jedem Abtastwert in der ersten und der zweiten Gruppe von Datenabtastwerten zu entfernen; und
(c) Frequenzübersetzungsmitteln, welche mit den hart begrenzenden Mitteln gekoppelt sind, um einen Untersatz der hart begrenzten Datenabtastwerte der ersten und der zweiten Gruppe in Grundband-Frequenzen zu Übersetzen, indem die Gruppe von Abtastwerten in der Zeitdomäne verkleinert wird; und
(d) Korrelationsmitteln (166, 168), welche operativ mit den begrenzenden Mitteln und den Übersetzungsmitteln (158, 160) gekoppelt sind, um den Untersatz hart begrenzter Datenabtastwerte der Gruppe aus Datenabtastwerten (162, 164) mit einer bekannten vorbestimmten Synchronisierungssequenz zu korrigieren, um unabhängig einen optimalen Abtastpunkt für die Gruppe von Datenabtastwerten zu bestimmen, um Symbolraten-Datenabtastwerte der Gruppe zu erzeugen, wobei die Korrelationsmittel (166, 168) die Symbolraten-Datenabtastwerte den Fehlersteuerungsmitteln zur Verfügung stellen, wenn die Fehlersteuerungsmittel geschätzte Informationssignal-Abtastwerte (208) entsprechend dem Fehlerdetektionsalgorithmus (201) erzeugen, wobei die Korrelationsmittel Kanalklanginformation bestimmen, Mitteln (174) zum Erzeugen von Gewichtungskoeffizienten der hart begrenzten Symbolraten-Datenabtastwerte der ersten und der zweiten Gruppe zum Diversity-kombinieren und zum Decodieren auf Grundlage der maximalen Wahrscheinlichkeit, Mitteln (184) zum Skalieren der ersten und der zweiten Gruppe von Symbolraten-Datenabtastwerten und zum Kombinieren auf Grundlage des maximalen Verhältnisses der ersten und der zweiten skalierten Symbolraten-Datenabtastwerte in einen Strom aus kombinierten Datenabtastwerten, wobei der Strom aus kombinierten Symbolraten-Datenabtastwerten den Fehlersteuerungsmitteln (202) zur Verfügung gestellt wird, wodurch die Fehlersteuerungsmittel geschätzte Informationssignal-Abtastwerte (208) entsprechend dem Fehlerkorrekturalgorithmus (202) erzeugen.

8. Digitales Funkkommunikationssystem mit zwei Betriebsarten mit einem Sender (102) mit der Funkkommunikationseinheit nach Anspruch 1 und einem Empfänger (104) mit der Funkkommunikationseinheit mit zwei Betriebsarten nach Anspruch 5.

## Revendications

1. Unité de radiocommunications bimode (100) pour un système de communication numérique, ladite unité (100) comprenant un moyen de contrôle d'erreurs pour protéger un signal d'information d'entrée des erreurs de transmission, le moyen de contrôle d'erreurs comprenant un premier (111) et un deuxième (112) dispositif de protection de transmission, et un moyen de sélection de mode, couplé au moyen de contrôle d'erreurs, pour activer uniquement l'un des dispositifs de protection de transmission à utiliser dans un mode particulier de fonctionnement de l'unité (100) et caractérisée en ce que :
le premier dispositif de protection de transmission inclut un moyen de détection d'erreurs (111) pour coder le signal d'information d'entrée (106) en un train de binaires d'information protégé contre les erreurs (114),
le deuxième dispositif de protection de transmission inclut un moyen de correction d'erreurs en aval (112) pour coder le signal d'information d'entrée (106) en un train de binaires d'information protégé contre les erreurs (114), et le moyen de sélection de mode comprend un moyen pour désactiver le dispositif de protection de transmission (111, 112) qui n'est pas utilisé dans le mode de fonctionnement particulier sélectionné.

2. Unité de radiocommunications bimode selon la revendication 1, dans lequel :
(a) le moyen de détection d'erreurs (111) comprend un contrôle de redondance cyclique générant un moyen pour coder le signal d'information d'entrée ; et
(b) le moyen de correction d'erreurs en aval (112) comprend un moyen pour coder par convolution et imbriquer le signal d'information d'entrée.

3. Unité de radiocommunications bimode selon l'une quelconque des revendications 1 ou 2, comprenant en outre :
(a) un moyen de codage des binaires d'information (108) couplé au moyen de contrôle d'erreurs pour coder le signal d'information d'entrée en un train de binaires d'information (110), le train de binaires d'information étant fourni au moyen de contrôle d'erreurs pour coder ensuite la protection de transmission ; et
(b) un moyen de synchronisation, couplé au moyen de contrôle d'erreurs pour insérer une séquence de synchronisation prédéterminée dans le train de binaires d'information protégé contre les erreurs.

4. Unité de radiocommunications bimode selon l'une quelconque des revendications précédentes, comprenant en outre :
(a) un moyen de modulation à phase multiple (120), couplé au moyen de contrôle d'erreurs pour générer un signal intermédiaire à phase multiple grâce à l'utilisation du signal d'information protégé contre les erreurs ; et
(b) un moyen de transposition de fréquence (124), couplé au moyen de modulation à phase multiple (120), pour générer un signal de transmission HF en mélangeant le signal intermédiaire avec un signal de sélection de voie de radiocommunications généré par un synthétiseur de fréquence (128), le synthétiseur de fréquence fonctionnant dans l'un des modes particuliers de fonctionnement incluant : (i) un mode à accès multiple par répartition dans le temps sans saut de fréquence et (ii) un mode à accès multiple par répartition de code à sauts de fréquence.

5. Unité de radiocommunications bimode (100) pour un système de communication numérique, comprenant :
un moyen de contrôle d'erreurs pour générer des échantillons de signaux d'information estimés (208) à partir d'un signal (164) reçu par une voie de radiocommunications en fonction d'un algorithme sélectionné dans un groupe d'algorithmes ; et
un moyen de sélection de mode, couplé au moyen de contrôle d'erreurs, pour recevoir le signal reçu (164) en fonction d'un algorithme du groupe d'algorithmes associé à un mode particulier de fonctionnement de l'unité de radiocommunications bimode,
et caractérisée en ce que le groupe d'algorithmes comporte un algorithme de détection d'erreurs (201) et un algorithme de correction d'erreurs (202), en en ce que le moyen de sélection de mode comprend un moyen pour désactiver le moyen de contrôle d'erreurs pour générer les échantillons de signaux d'information estimés (208) en fonction de l'algorithme (201, 202) qui n'est pas utilisé dans le mode particulier de fonctionnement sélectionné.

6. Unité de radiocommunications bimode selon la revendication 5, dans laquelle :
le moyen de contrôle d'erreurs pour générer des échantillons de signaux d'information estimés (208) en fonction de l'algorithme de détection d'erreurs (201) comprend en outre un moyen (141) pour générer un premier et un deuxième groupes d'échantillons de données du signal reçu correspondant au signal reçu sur une première (138) et une deuxième (140) antenne et pour sélectionner l'un des premier et deuxième groupes d'échantillons de données correspondant à l'antenne ayant une meilleure qualité de signal estimée, un moyen (201) pour exécuter un contrôle de redondance cyclique sur le groupe sélectionné d'échantillons de données et pour extraire les binaires d'information (203) du groupe sélectionné d'échantillons de données, un moyen (158, 160) pour générer un premier (162) et deuxième (164) groupes d'échantillons de données du signal reçu correspondant au signal reçu sur la première et la deuxième antenne, un moyen (174) pour générer des coefficients de pondération pour les échantillons de données du premier (162) et du deuxième (164) groupes, la mise à l'échelle (184) et la combinaison du rapport maximal du premier et du deuxième groupes dans un train d'échantillons de données combinés (200), et un moyen (202) pour désimbriquer et décoder au maximum 202 le train d'échantillons de données combinés (200) en échantillons d'information estimés (204).

7. Unité de radiocommunications-bimode selon la revendication 5, comprenant en outre :
(a) un moyen de démodulation (150, 152) pour générer un premier (162) et un deuxième (164) groupes d'échantillons de données du signal reçu correspondant au signal reçu sur une première (138) et une deuxième (140) antenne, respectivement, grâce à l'utilisation d'un signal de sélection de voie de radiocommunications généré par un synthétiseur de fréquence (128), le synthétiseur de fréquence fonctionnant dans l'un des deux modes particuliers de fonctionnement incluant : (i) un mode à accès multiple par répartition dans le temps sans saut de fréquence et (ii) un mode à accès multiple par répartition de code à sauts de fréquence ;
(b) un moyen d'écrêtage et de transposition (158, 160) comprenant :
un moyen d'écrêtage à niveau constant couplé au moyen de démodulation (150, 152) pour éliminer l'amplitude de chaque échantillon dans le premier et le deuxième groupes d'échantillons de données ; et
(c) un moyen de transposition de fréquence, couplé au moyen d'écrêtage à niveau constant, pour transposer un sous-ensemble d'échantillons de données écrêtés à niveau constant du premier et du deuxième groupes sur des fréquences de bande de base en décimant le groupe d'échantillons dans le domaine temporel ; et
(d) un moyen de corrélation (166, 168), couplé pour fonctionner avec le moyen d'écrêtage et de transposition, pour corréler un sous-ensemble d'échantillons de données écrêtés à niveau constant du groupe d'échantillons de données (162, 164) sur une séquence de synchronisation prédéterminée connue de façon à déterminer indépendamment un point d'échantillonnage optimal pour - chaque groupe d'échantillons de données pour générer des échantillons de données de symboles du groupe, le moyen de corrélation (166, 168) fournissant les échantillons de données de symboles au moyen de contrôle d'erreur lorsque ce dernier génère les échantillons de signaux d'information estimés (208) en fonction de l'algorithme de détection d'erreurs (201) et le moyen de corrélation détermine les informations de sondage de voie, un moyen (174) pour générer des coefficients de pondération des échantillons de données de symbole écrêtés à niveau constant du premier et du deuxième groupes pour un combinaison en diversité et un décodage maximum, un moyen (184) pour mettre à l'échelle le premier et le deuxième groupes d'échantillons de données de symbole et combiner le rapport maximal des premier et deuxième échantillons de données de symbole mis à l'échelle, et fournir un train d'échantillons de données de symbole combinés au moyen de contrôle d'erreur (202) alors que ce dernier génère des échantillons de signaux d'information estimés (208) en fonction de l'algorithme de correction d'erreur (202).

8. Système de radiocommunications numérique bimode comprenant un émetteur (102) comprenant une unité de radiocommunications selon la revendication 1 et un récepteur (104) comprenant une unité de radiocommunications bimode selon la revendication 5.
